# EUROPEAN PATENT APPLICATION

(11) **EP 4 761 050 A1**
(43) Date of publication of application: **17.06.2026**
(21) Application number: 24219684.8
(22) Date of filing: 13.12.2024
(51) Int. Cl.: H02J 7/34

(54) **METHOD FOR OPERATING AN ENERGY STORAGE SYSTEM OF A WIND TURBINE, ENERGY STORAGE SYSTEM AND ENERGY STORAGE DEVICE**

(71) Applicant: Nordex Energy SE & Co. KG, 22419 Hamburg (DE)
(72) Inventor: Rave, Christian, 22419 Hamburg (DE)
(74) Representative: Völkl Siebenson Patentanwälte - Partnerschaft mbB

(57) **Abstract**

The method is for operating an energy storage system (200) which comprises an energy storage device (240) having a serial connection of energy storage cells (242). The energy storage system further comprises a plurality of contact points (244, 246, 248) across the serial connection for measuring a parameter (P) as well as a charging circuit (214) for charging the energy storage device. The method comprises a step of providing first information (I1) which is representative of an outcome of an operation performed on at least one measured value (M) of the parameter across at least one pair of contact points. In a further step, second information (I2) is provided which is representative of an outcome of an operation performed on at least one reference value (D) of the parameter across the at least one pair of contact points. The at least one reference value is the value of the parameter expected when the energy storage device is of a predefined type. Third information (I3) is determined depending on the first and the second information. The third information is representative of whether the energy storage system is of the predefined type. In a further step, operating information (OI_1, OI_2, OI_3) for the charging circuit is determined depending on the third information.

## Description

The present disclosure relates to a method for operating an energy storage system of a wind turbine as well as to a computer program, a computer-readable data carrier, a control device, an energy storage system, an energy storage device, a set of energy storage devices and a wind turbine.

Wind turbines are widely known and are used to convert wind energy into mechanical work and subsequently into electrical energy. Among others, wind turbines may comprise one or more energy storage systems, for example, for powering electro-mechanical actuators to control all or some mechanical subassemblies of the wind turbine. Reliable operation of the energy storage system is essential, particularly in emergency situations. By way of example, in a grid fault event, the energy storage system may be used to power pitch actuators for moving the rotor blades of the wind turbine into their feathering position in order to reduce the speed of the rotor, and, eventually, to bring it to standstill.

To ensure a reliable operation of the energy storage system, it is important to charge the energy storage device of the energy storage system correctly. Wrong charging may lead to significantly reduced lifetime and, in the worst case, to catastrophic failure of the energy storage system in emergency situations.

There is a need for a method for operating an energy storage system of a wind turbine which contributes to a proper charging of the energy storage device of the energy storage system, particularly a method which enables detection of wrong charging hardware and/or software characteristics, and thereby, to prevent wrong charging of the energy storage device. Furthermore, there is a need for a computer program, a computer-readable data carrier and a control device for executing such a method. Additionally, there is a need for an energy storage system and an energy storage device with which such a method can be performed. Moreover, there is a need for a wind turbine with such an energy storage system.

First, the method for operating an energy storage system of a wind turbine according to an embodiment is specified.

The method is for operating an energy storage system which comprises an energy storage device having a serial connection of energy storage cells. The energy storage system further comprises a plurality of contact points across the serial connection for measuring a parameter, as well as a charging circuit for charging the energy storage device. The method comprises providing first information which is representative of an outcome of an operation performed on at least one measured value of the parameter across at least one pair of contact points of the plurality of contact points. Further, second information is provided which is representative of an outcome of an operation performed on at least one reference value of the parameter across the at least one pair of contact points. The at least one reference value of the parameter across the at least one pair of contact points is the value of the parameter expected across the at least one pair of contact points when the energy storage device is of a predefined type. Furthermore, third information is determined depending on the first and the second information. The third information is representative of whether the energy storage system is of the predefined type. In a further step, operating information for the charging circuit is determined depending on the third information.

The present disclosure is, inter alia, based on the recognition that different energy storage devices, like batteries (lead acid or lithium) or ultracapacitors, are used in modern wind turbines. Different types of energy storage devices require different charging characteristics. Differences go from a different charging voltage or different maximum currents to entire charging strategy. Choosing the wrong charging characteristics or hardware features significantly reduces the lifetime of the energy storage device, and results in a catastrophic failure in the worst-case scenario.

Thus, when different types of energy storage devices are available, it is essential to select the correct charging characteristics. Depending on the charging circuit, this is done either by using fitting or compatible hardware features, and/or by programming the charging circuit with correct charging parameters. Typically, the charging circuit or an external monitoring function monitors the maximum voltage of the energy storage device to prevent overcharging and associated adverse impacts. Especially in safety relevant cases like in the pitch actuation system of the wind turbine, a lower voltage threshold is monitored in addition to the upper threshold limit in order to ensure that there is enough energy for a safety run and to prevent deep discharge. However, when the wrong charging characteristics are used, e.g., by installing a wrong charging circuit or programming wrong charging parameters, it is likely that also the monitoring thresholds are wrong. Thus, the information extractable from the monitoring cannot help in identifying whether the correct charging characteristics are used.

The present disclosure solves the above-mentioned problems in a different, more flexible and reliable way. Whether the correct charging characteristics are used, particularly whether the used charging circuit and/or the used charging parameters match with the energy storage device, is determined by comparing one or more measured values of the actually used energy storage system with one or more reference values which would be expected if the energy storage system would be of a predefined type. For this purpose, it is, for example, exploited that, in large electrical energy storage devices such as the one in the pitch actuation system, several energy storage cells are connected in series. Usually, several contact points are distributed across the serial connection. These contact points can be used, for example, to measure voltages or temperature-dependent resistances in order to check if the energy storage device is charged homogeneously or if the temperature is in the normal range.

The present disclosure is based on the recognition that the contact points can not only be used to monitor the current state of the energy storage device, but also enable to perform certain operations on parameters measured or determined across defined pairs of contact points. The outcomes of such operations can be characteristic or typical for the type of the energy storage system that is being employed. This may be ascertained by comparing the outcome of the operation with the outcome of the operation performed on a reference value of the parameter under consideration. If the comparison reveals a significant deviation, it can, for example, be concluded that the actual energy storage system that is operating is not the expected energy storage system which would have served the desired purpose.

This way, through a systematic approach involving certain operational features of the existing system elements, wrong charging of the energy storage device can be prevented, without relying solely on the selection of the charging characteristics made by technicians, manufacturers, etc.

The method disclosed herein is, in particular, a computer-implemented method, i.e., performed with the help of a computer or a processor. Thus, information, like the first, the second and the third information is electronic information such as electronic data or instructions. For example, the operating information is an electronic signal or a control command or an instruction or a setpoint for the charging circuit.

Herein, when information is representative of a certain quantity or certain quantities, this means that the quantity can be extracted from the information, either directly, or the quantity/quantities can at least be derived from the information. In other words, the quantity/quantities is/are stored in the information, or at least data are stored in the information, from which the quantity/quantities can be derived or determined or calculated or deduced, respectively.

The energy storage system may be part of an electro-mechanical actuation system. The electro-mechanical actuation system may comprise an electro-mechanical actuator, such as an electric motor. The energy storage device may be connected or may be connectable to the electro-mechanical actuator in order to provide the actuator with electric energy. The electro-mechanical actuation system is, for example, the yaw actuation system which is configured to change the position of the nacelle of the wind turbine. Alternatively, the electro-mechanical actuation system may be the pitch actuation system which is configured to change the pitch angle of a rotor blade or the pitch angles of several rotor blades. The energy storage device may alternately be referred to as an energy supply device, backup energy store, backup power supply, standby energy supply device, emergency power supply and so on.

The energy storage device comprises, for example, at least four or at least ten or at least 15 energy storage cells connected in series, and the upper limit of the cells in such a storage device may go up to 100 or up to 200 or up to 300.

The contact points are, for example, electrical contact points, e.g., terminals, of the energy storage cells. Alternatively, the contact points may be electrically isolated from the energy storage cells for determining a non-electrical parameter, e.g., temperature using temperature sensors. In this case, the contact points may be in a serial connection which is arranged parallel (in addition to being isolated) to the serial electrical connection of energy storage cells.

The parameter determined across said contact points may be, for example, voltage or power or current or resistance or temperature. For example, at least two or at least three contact points are assigned to the energy storage device and distributed across the serial connection. In one example, at least two different contact points are assigned to two different energy storage cells. For example, at least two different contact points are assigned to two different energy storage devices, such that the number of storage cells between the at least two contact points are different for both the devices. Further, the contact points may be such that at least one energy storage cell is arranged between two adjacent contact points, in particular between each of the two adjacent contact points.

The charging circuit may be an in-built charging circuit, for example, within a converter, like a bidirectional converter, particularly a DC/DC bi-directional converter. Such a converter can take part in charging the energy storage device from a DC link intermediate circuit in one operational mode, and discharge it, e.g., for powering the electro-mechanical actuator via the DC link intermediate circuit in another operational mode. Alternatively, the charging circuit may be an external charger which charges the energy storage device from a separate power supply, e.g., the DC link intermediate circuit or a power supply different from the DC link intermediate circuit.

As outlined earlier, the first information is representative of an outcome or result of an operation performed on one or more measured values of the parameter across the contact points. A measured value corresponds to measurements made across a pair of contact points. "Across a pair of contact points" means, in particular, that the measurement of the parameter is done between the contact points of the pair of contact points of interest. For example, a measured value of the parameter is the voltage (difference) between two contact points or the resistance between two contact points.

According to an embodiment, the operation is herein meant to be a mathematical operation or at least represented by a mathematical function. It may be an identity operation so that the outcome of the operation is the at least one measured value itself (f(x) = x). Alternatively, the operation is such that it transforms the at least one measured value into at least one other value. In particular, the operation may be a multiplication, a deviation, a derivative, an integral, a logarithm, a summation or a subtraction of two or more measured values.

According to an embodiment, the operation may refer to a set or sequence of operations encompassing several steps of computations involving mathematical and/or other functions, and carried out in a computing environment, e.g., a processor.

The second information is representative of an outcome or a result of an operation performed on one or more reference values of the parameter across the at least one pair of contact points. A reference value is the value of the parameter which is expected across a pair of contact points if the energy storage system would be of a predefined type. For example, the reference value is the value of the parameter which is expected to be measured if the energy storage system would be of the predefined type.

The predefined type of energy storage system is, in particular, the expected type of energy storage system. In other words, a predefined type of energy storage system is the one which executes the commands or instructions input to it to provide the expected or desired outcome which it is supposed to. For example, when executing the method, one anticipates or expects that the energy storage system is of a certain type that is purposed to provide a desired outcome, and the method is used to confirm that this anticipation/expectation is correct or wrong.

If the actual, outcome of the operation performed on the measured value of the parameter (or parameters) in connection with the energy storage system coincides or substantially coincides or is in agreement with the anticipated or expected outcome, i.e. with the outcome of the operation performed on the reference value, then the assumption or expectation is correct, indicating that the right type of energy storage system is in operation with appropriate operating characteristics.

"Energy storage system of a predefined type" herein includes that the energy storage device is of a predefined type and/or the charging circuit is of a predefined type and/or the charging parameters are of a predefined type.

In other embodiments, the "energy storage system of a predefined type" may be defined as a coherent, a homogeneous, and a harmonious system encompassing the energy storage device, the charging circuit, the control (hardware and/or software based, internally and/or externally configured), and the operational parameters (including charging parameters), all of which are operating to produce a desired outcome i.e., operate the end using equipment, e.g., an electro-mechanical actuator in case of a pitch system of a wind turbine.

According to an example, only if the energy storage device, the charging circuit, and the charging parameters of the energy storge system under consideration are each of the predefined type, the energy storage system is identified to be of the predefined type. Particularly, only if all components of the energy storage system under consideration are of the predefined types, the energy storage system is identified to be the predefined energy storage system.

For example, two different types of energy storage systems may differ from each other based on the types of energy storage devices used in them. Two different types of energy storage devices may differ from each other, for example, in terms of the relative arrangement between the plurality of contact points across the serial connection. Additionally, or alternatively, two different types of energy storage devices may differ from each other by the resistance between at least two contact points. Accordingly, the outcome of the operation performed on the measured values of the parameters measured across the pair or pairs of contact points may differ for different types of energy storage devices.

The different types of energy storage systems may all be configured such that a state of charge of the energy storage device is in a balanced manner or in a substantially balanced manner, i.e., all energy storage cells have the same voltage (or energy) or almost the same voltage (or energy) during charging or when charged.

The first information and the second information are comparable to each other. This means that the first information is representative of an outcome and the second information is representative of an outcome which corresponds to or is comparable to the outcome of the first information. Particularly, the one or more reference values is/are the value(s) across the same pair(s) of contact points as the measured value(s), and the operation performed on this at least one reference value is the same operation as performed on the measured value(s).

The third information is determined depending on the first and the second information. The third information is representative of whether the energy storage system is of the predefined type.

For example, determining the third information comprises comparing the first information with the second information, and/or comprises comparing the first information with at least one tolerance value defined or specified relative to the second information.

Particularly, determining the third information comprises determining whether the outcome of the operation performed on the at least one measured value of the first information lies within a predefined range around the outcome of the operation performed on the at least one reference value of the second information. If this is fulfilled, the third information is, for example, determined to be representative of the energy storage system to be of the predefined type. If it is not fulfilled, the third information is, for example, determined to be representative of the energy storage system to not be of the predefined type.

The operating information is determined depending on the third information. For example, the operating information is configured to influence or change or tune the operation of the charging circuit, or prompt a need to fix one or more elements or charging parameters or both associated with the charging circuit.

According to a further embodiment, the at least one pair of contact points comprises a first pair of contact points and a second pair of contact points. At least one contact point of the first pair is not part of the second pair.

Two different types of energy storage devices may differ from each other in terms of the relative arrangement of the first pair of contact points and the second pair of contact points. For example, the ratio of the number of energy storage cells between the first pair of contact points and the second pair of contact points is different for two different types of energy storage devices.

According to a further embodiment, the parameter is the voltage or the voltage difference, respectively.

According to a further embodiment, the first information is representative of a first ratio which is an outcome of an operation performed on a measured voltage across the first pair of contact points and a measured voltage across the second pair of contact points. In other words, the outcome is the ratio of the two measured voltages across the different pairs of contact points. The measured voltage across a pair of contact points is, in particular, the effective voltage, e.g., summed-up over the energy storage cells between the pair of contact points. That is, the contact points are electrically connected to the serial connection of the predefined number of energy storage cells in the energy storage device.

According to a further embodiment, the second information is representative of a second ratio which is an outcome of an operation performed on a reference voltage across the first pair of contact points and a reference voltage across the second pair of contact points.

The reference voltages are the voltages expected, for example, to be evident or to be measured or to be determined or to be deduced across or between the contact points of the two pairs if the energy storage system would be of the predefined type. The reference voltage across a pair of contact points is, in particular, the effective voltage, e.g., the summed-up voltage of the energy storage cells between the pair of contact points.

Thus, for determining the third information depending on the first and the second information, the (first) ratio of the measured voltages is compared to the (second) ratio of the reference voltages. Indeed, the ratio of voltages is particularly sensitive to different relative arrangements of the contact points along the serial connection of energy storage cells.

According to another embodiment, the operation performed on the measured and the reference voltages is different from determining a ratio.

According to a further embodiment, the parameter is other than voltage, for example, resistance, temperature, etc.

According to a further embodiment, the first information is representative of an outcome of an operation, e.g., a first difference or a first ratio, performed on a measured resistance between the first pair of contact points and a measured resistance between the second pair of contact points. The measured resistances are, in particular, resistance values of temperature-dependent resistance elements used for monitoring the temperature in the energy storage device.

The contact points may, in this case, be electrically isolated from the serial connection of energy storage cells. For instance, a different number of temperature dependent resistances, like PT100 or PT1000 elements, are arranged between the contact points of the first pair of contact points and between the contact points of the second pair of contact points.

According to a further embodiment, the second information is representative of an outcome of an operation, e.g., a second difference or a second ratio, performed on a reference resistance between the first pair of contact points and a reference resistance between the second pair of contact points. The reference resistances are the values of the resistance which are expected, for example, to be evident or or to be determined or to be deduced or to be measured when the energy storage system would be of the predefined type. The reference resistances are, in particular, resistances of temperature-dependent resistance elements.

According to a further embodiment, the first information is provided during charging the energy storage device with the help of the charging circuit. Particularly, the first information and the second information are representative of the outcomes/results of the operation during the charging of the energy storage device or when charged. The first information and the second information may be representative of the outcomes/results of the operation as a function of time.

According to a further embodiment, the predefined type of energy storage system comprises a predefined type of energy storage device. The predefined type of energy storage device is a type which is compatible with at least the charging circuit of the energy storage system and the operation of this charging circuit, particularly with its operational parameters, e.g., charging parameters. Particularly, the charging circuit and its corresponding operational parameters, which are actually used for charging the energy storage device (among other purposes), are especially configured for charging a certain type of energy storage device. This certain type of energy storage device is the expected energy storage device, i.e., the energy storage device of the predefined type. Accordingly, the predefined type of energy storage system is an energy storage system which comprises this predefined type of energy storage device, the actually used charging circuit, and the actually used or implemented corresponding operational parameters.

"Compatible" or "especially configured" herein means, for example, that the right hardware and software characteristics are used in the charging circuit for charging the predefined type of energy storage device. This means, the hardware and software characteristics of the charging circuit match with the desired charging characteristics or output or performance of the predefined type of energy storage device, which leads to an optimization of the SOH (state of health) and lifetime of the energy storage device, without leading to or causing any adverse effects on the system.

According to a further embodiment, the operating information is determined such that charging of the energy storage device with the help of the charging circuit is at least disabled, if a first condition is met. The first condition comprises that the third information is representative of the fact that the energy storage system is not of the predefined type.

According to another embodiment, the operating information is determined such that charging of the energy storage device with the help of the charging circuit is changed, e.g., updated or rectified, if the first condition is met.

According to a further embodiment, the operating information is determined such that charging of the energy storage device is temporarily disabled, if the first condition is met, i.e., if the energy storage system if not of the predefined type. The operating information may be determined such that, after temporarily disabling, charging is resumed with updated charging parameters. According to an example, the updated charging parameters may be the appropriate parameters that render the energy storage system as the predefined type which has not been the case earlier.

According to an example, before resuming the charging, the charging parameters are updated, e.g., using values from a look-up table or predetermined values programmed into the system or using a specification provided by the manufacturer. The updated charging parameters are chosen such that they match the energy storage device, i.e., such that the updated charging parameters make the charging characteristics compatible with the energy storage device. For example, neither the charging circuit nor the energy storage device is exchanged in this case but only the operational characteristics, e.g., commands, instructions, data set, etc., associated with operation of the energy storage device is updated by using the new charging parameters. This may apply in cases where the hardware features of the energy storage system are apt to render the energy storage system as the predefined type, but operational characteristics have been wrongly defined or input, e.g., programmed.

The charging parameters are, for example, the maximum allowable voltage and/or the minimum allowable voltage and/or the charging current, for example in each case as a function of time.

According to a further embodiment, the method further comprises the step of providing a signal which is indicative of at least one of the updated charging parameters and a corrective action. For example, the operating information is representative of the at least one updated charging parameter such that, when the charging circuit is operated according to the operating information, it is operated with this at least one updated charging parameter.

If the signal is indicative of a corrective action, the signal may be configured to provide an indication, e.g., a warning to an operator, or a qualitative indication of a corrective measure, e.g., suggestion on rectification or replacement of a faulty parameter, data, command, etc., with the right one.

In the example of providing a warning signal, the signal is configured to cause a visual or acoustic warning signal to an operator. When noticing the warning signal, the operator may exchange the charging circuit and/or the energy storage device and/or may manually change the charging parameters for the charging circuit.

According to a further embodiment, the charging circuit is configured within a bidirectional converter or is part of a bidirectional converter or is a bidirectional converter. The bidirectional converter connects, for example, a DC-link intermediate circuit with the energy storage device. The DC-link intermediate circuit connects, for example, a supply grid with an electro-mechanical actuator of an actuation system.

According to a further embodiment, the charging circuit is an external charger connectable to the energy storage device. It charges the energy storage device with electrical energy from a separate power source, e.g., a source being different from the DC link intermediate circuit, or the DC link intermediate circuit itself, for example.

Next, the computer program, the computer-readable data carrier and the control device are specified.

According to an embodiment, the computer program comprises instructions which, when the program is executed by a control device, cause the control device to carry out the method according to any of the embodiments described herein.

According to an embodiment, the computer-readable data carrier has the computer program stored thereon.

According to an embodiment, the control device comprises means for executing the method according to any of the embodiments described herein. The control device may be a controller. Particularly, the control device may comprise a processor or PLC for executing the method. The control device may be a separate control device (hardware) which is, for example, communicatively connected or connectable to the energy storage system, particularly to the charging circuit thereof. Considering the example of a wind turbine, the control device could be the main controller of the wind turbine (also called "turbine controller") or could be of a dedicated type, e.g., the pitch controller communicatively interfaced with the pitch system having a battery or an ultracapacitor as the energy storage device. Alternatively, the control device may be or may not be part of the energy storage system, particularly of the charging circuit thereof.

Next, the energy storage system is specified.

According to an embodiment, the energy storage system comprises an energy storage device having a serial connection of energy storage cells. The energy storage system further comprises a plurality of contact points across the serial connection. The plurality of contact points provides or comprises at least one pair of contact points configured for performing a measurement of a parameter across the at least one pair of contact points. The energy storage system further comprises a charging circuit for charging the energy storage device. The energy storage system is configured to perform the method according to any one of the embodiments described herein.

Since the energy storage system is configured to perform or execute the method described herein, all features disclosed for the method are also disclosed for the energy storage system and vice versa.

The charging device is, in particular, electrically connected or connectable to the energy storage device in order to charge it.

Next, the energy storage device is specified. The energy storage device can be used in the method described herein. Accordingly, all features disclosed for the method are also disclosed for the energy storage device and vice versa.

According to an embodiment, the energy storage device comprises a serial electrical connection of energy storage cells. Furthermore, the energy storage device comprises a first, a second, and a third contact point across the serial connection. The contact points are configured such that at least one measurement of a parameter can be taken across at least one pair of contact points. In one configuration, the third contact point is arranged between the first and the second contact point.

The contact points are, in particular, configured for taking measurement, including, but not limited to voltage measurements and/or resistance measurements, in particular between the first and the second contact points as well as between the first and the third contact points. The contact points may be electrically connected to the serial connection of energy storage cells, i.e., connected along the serial connection. Alternatively, the contact points may only be arranged geometrically across the serial connection but may be electrically isolated from the energy storage cells.

According to an embodiment, the third contact point is not arranged in the center of the serial connection of energy storage cells. For example, the number of energy storage cells electrically connected between the first and the third contact point differs from the number of energy storage cells electrically connected between the second and the third contact point. The two numbers may differ from each other by, for example, at least 2 or at least 3 or at least 4 or at least 5. Accordingly, with such an arrangement, the ratio between the measured voltages across the first pair of contact points and the measured voltage across the second pair of contact points would be different by, for example, 0.5.

The first and the second contact points are, in particular, the plus and minus terminals for charging the energy storage device. For example, the first and the second contact points are arranged at the two opposite ends of the serial connection between which all the cells are present. The third contact point may be a center contact point or a substantially center contact point configured to be connected as a center terminal of the charging circuit.

According to a further embodiment, the first pair of contact points comprises the first contact point and the third contact point. The second pair of contact points comprises the first contact point and the second contact point. That is, the first pair of contact points and the second pair of contact points share a common contact point, namely the first contact point.

According to an embodiment, more than two pairs of contact points may be considered and accordingly, two or more common contact points may be considered for carrying out the method.

Next, the set of energy storage devices is specified.

According to an embodiment, the set of energy storage devices comprises an energy storage device of a first type and an energy storage device of a second type. The energy storage device of the first type is an energy storage device according to any of the embodiments described herein. The energy storage device of the second type likewise comprises a serial electrical connection of energy storage cells, as well as a first, a second and a third contact point across the serial connection. The third contact point is arranged between the first and the second contact point.

According to an embodiment, the energy storage device of the first type differs from the energy storage device of the second type by the ratio of the number of energy storage cells between the first and the second contact points to the number of energy storage cells between the first and the third contact points. The energy storage cells or the serial connection thereof are, in particular, electrically connected to the first, the second and the third contact point.

According to an embodiment, the energy storage device of the first type differs from the energy storage device of the second type by the ratio of the resistance between the first and second contact points to the resistance between the first and the third contact points. For example, the two types of energy storage devices each comprise one or more resistance elements, particularly temperature-dependent resistance elements. The temperature-dependent resistance elements may all be designed equally, i.e., have the same resistance values. The resistance elements of each energy storage device are, for example, electrically connected in series and the contact points are electrically connected to this serial connection of resistance elements. The serial connection of resistance elements is, in particular, arranged geometrically parallel to the serial connection of energy storage cells. By way of example, the energy storage device of the first type differs from the energy storage device of the second type by the ratio of the number of resistance elements between the first and the second contact points to the number of resistance elements between the first and the third contact points.

The energy storage device of the first type and the energy storage device of the second type can be handled independently of each other. The set may comprise several energy storage devices of the first type and several energy storage devices of the second type. Moreover, the set may comprise one or more energy storage devices of a third type, and, optionally, of a fourth type, and, optionally, of a fifth type and so on. Depending on the needs, one can choose between the energy storage devices of the different types.

For example, the type of the energy storage device is chosen depending on the type and/or size of the wind turbine in which the energy storage device is to be used. Additionally, or alternatively, the type of the energy storage device is chosen depending on the subsystem of the wind turbine in which the energy storage device is to be used.

By way of example, the energy storage device of the first type and the energy storage device of the second type comprise the same number of energy storage cells. Alternatively, they may comprise a different number of energy storage cells.

According to a further embodiment, the first type and the second type of the energy storage devices differ from each other in terms of the technology used for storing energy. For example, the first type is based on ultracapacitors and the second type is based on batteries or vice versa.

According to a further embodiment, the first type is based on lithium batteries and the second type is based on lead acid batteries or vice versa.

Next, the wind turbine is specified.

According to an embodiment, the wind turbine comprises an energy storage system according to any of the embodiments described herein. For example, the energy storage system is part of the pitch actuation system or the yaw actuation system.

Hereinafter, the method for operating an energy storage system of the wind turbine, the control device, the energy storage system, the energy storage device, the set of energy storage devices and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description there of is not repeated for each of the following figures. For the sake of clarity, elements might not appear with corresponding reference symbols in all figures.
Figure 1 shows an exemplary embodiment of a schematic of the wind turbine,
Figure 2 shows an exemplary electro-mechanical actuation system for a wind turbine comprising an energy storage system according to embodiments of the present disclosure,
Figures 3 and 4 show two different exemplary configurations of the energy storage device according to some embodiments of the present disclosure,
Figure 5 shows an exemplary arrangement of the set of energy storage devices,
Figure 6 shows an exemplary flow diagram of the method for operating an energy storage system according to embodiments of the present disclosure,
Figures 7 and 8 show two graphs illustrating the method for operating an energy storage system,
Figures 9 to 11 show further exemplary embodiments of energy storage devices,
Figure 12 shows a further exemplary embodiment of an electro-mechanical actuation system for a wind turbine comprising an exemplary embodiment of the energy storage system.

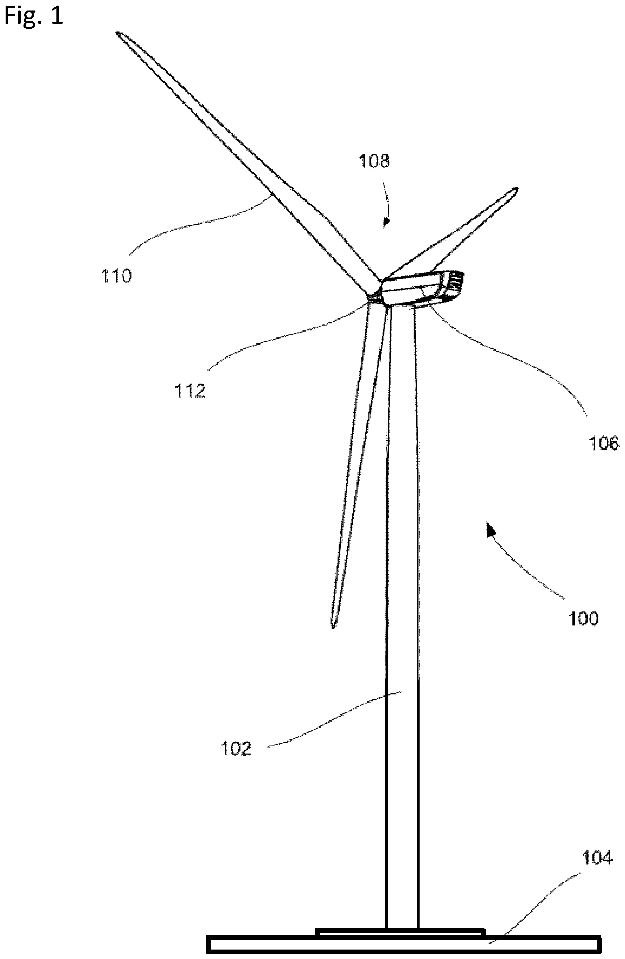

Figure 1 shows a schematic view of a wind turbine 100, which comprises a tower 102. The tower 102 is fixed to the ground by means of a foundation 104. At one end of the tower 102, opposite to the ground, a nacelle 106 is rotatably mounted. The nacelle 106, for example, comprises a generator (not shown) which is coupled to a rotor 108 via a rotor shaft (not shown). The rotor 108 comprises one or more (wind turbine) rotor blades 110, which are movably arranged on a rotor hub 112.

During operation, the rotor 108 is set in rotation by air flow, in particular aerodynamic forces resulting from the interaction of wind with the rotor blades. This rotational movement is transmitted to the generator via the rotor shaft, with or without a gearbox. The generator converts the mechanical energy of the rotor 108 into electrical energy.

To control the rotational speed of the rotor 108, the rotor blades 110 can be adjusted by rotating them about their longitudinal axis. This rotation is performed by a pitch actuation system, comprising one or more pitch drives. Alternatively, or in addition, the rotational speed or other characteristics of the rotor 108 can be controlled by rotating the entire nacelle 106, thereby adjusting the relative angle between the rotor main axis and the direction of the wind. This rotation of the nacelle 106 and the rotor 108 into the direction of wind or away from the wind is performed by a yaw actuation system comprising one or more yaw drives. The pitch and yaw actuation systems also facilitate the rotor to be brought into reduced power mode or standstill during extreme/adverse situations, for example, during wind gusts, failure of components, etc.

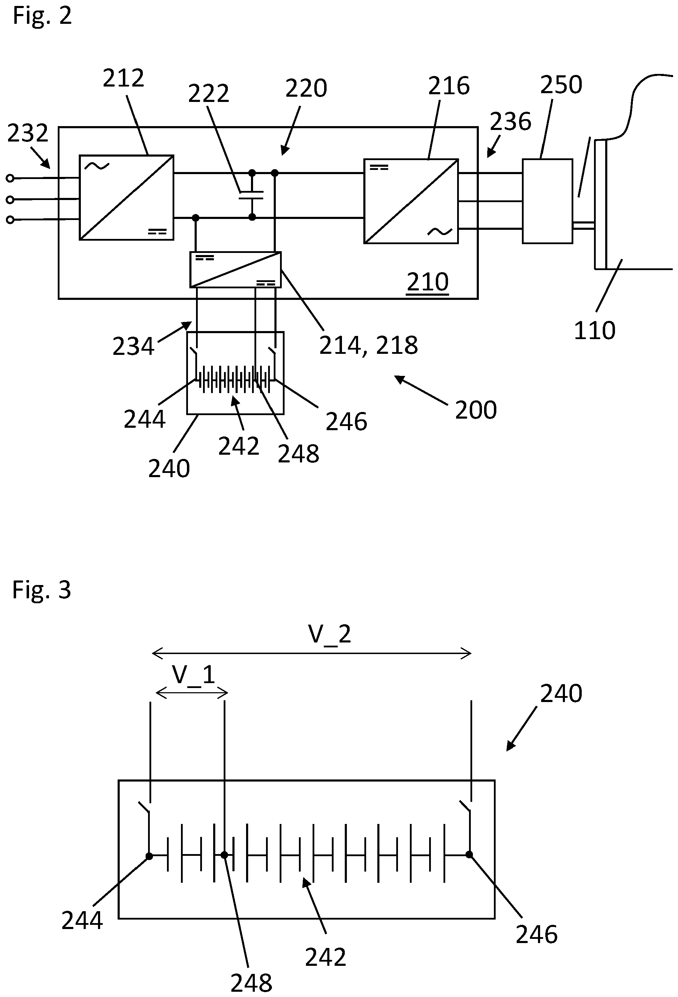

Figure 2 shows an exemplary embodiment of an actuation system. It is, for example, the pitch actuation system referred to in description of figure 1. The actuation system comprises an energy storage system 200 according to some embodiments of the disclosure. The energy storage system 200 comprises, inter alia, an energy storage device 240, and a charging circuit 214 for charging the energy storage device 240. The charging circuit 214 is configured within a bidirectional converter 218 according to one exemplary configuration.

The actuation system comprises, besides the energy storage system 200, an electro-mechanical actuator 250, and a converter system comprising a first converter 212 and a second converter 216. The actuation system is communicatively associated with a control device 210 which is an actuation controller 210. In an embodiment, the control device 210 may interact with the turbine (main) controller (not shown) of the wind turbine. For example, during operation, the control device 210 controls the converters 212, 216, 218 and the charging circuit 214.

The first converter 212, the bidirectional converter 218 and the second converter 216 are interconnected by means of a DC link intermediate circuit 220 (interchangeably referred to as "DC link" throughout for simplicity). Further, in addition to two respective power rails, the DC link intermediate circuit 220 comprises one or more DC link capacitors 222.

The first converter 212 is configured as an AC/DC converter, for example, as a unidirectional or a bi-directional AC/DC converter. In particular, it may be a full or half-wave rectifier circuit rectifying a three-phase AC voltage received from a supply grid input 232 into a corresponding DC output voltage provided to the DC link capacitor 222. The second converter 216 is, for example, an inverter.

The bidirectional converter 218 is configured, for example, as a bidirectional DC/DC converter. This means that the converter 218 may take a voltage provided from the DC link intermediate circuit 220 and convert it into appropriate voltage for charging the energy storage device 240. For this purpose, it may transfer power from the supply grid to the energy storage device 240 and/or it may transfer power from the actuator 250, when it is operated as a generator, to the energy storage device 240.

In principle, the voltage provided at an energy storage terminal 234 is lower than the DC voltage provided by the first converter 212 to the DC link intermediate circuit 220. Accordingly, the bidirectional converter 218 may comprise a step-down converter or serve as a step-down converter to convert the voltage of the intermediate circuit 220 into a lower voltage for charging the energy storage cells 242 of the energy storage device 240. The energy storage cells 242 may be batteries or so-called supercapacitors or ultracapacitors. They are, in particular, connected in series, as can be seen in figure 2.

Instead of charging the energy storage device 240, the converter 218 can also convert a discharge voltage provided by the energy storage device 240 to an appropriate DC link voltage for the DC link intermediate circuit 220. For this purpose, the converter 218 may comprise one or more step-up (also referred as boost converters) and/or step-down converters.

During normal operation of the wind turbine 100, the converter system receives energy from the supply grid input 232 and uses it to provide operating energy to the inverter 216 and the actuator 250 connected thereto. In the presented example, the second converter 216 converts the DC link voltage provided by the DC link intermediate circuit 220 into a three-phase AC voltage and provides it at respective terminals 236 of the electro-mechanical actuator 250, for example, three phase motor terminals of a servo motor. In the described example, a permanent magnet synchronous motor (PMSM), which is typically an AC motor, is used. However, other motor types, such as squirrel cage asynchronous (AC) motors, permanent magnet DC motors (like brushless and brushed DC motors) may be employed. In an alternate embodiment, an entirely different type of an actuator, such as a linear actuator may be employed.

If normal operation is not possible, such as in emergency situations, e.g., during short grid faults, the power from the energy storage device 240 is needed in order to operate the actuator 250. For this purpose, it has to be ensured that the energy storage device 240 has been charged properly with the help of the charging circuit 214 and that it has not been damaged during the charging process. Particularly, it has to be ensured that the charging circuit 214 and/or the charging parameters used by this charging circuit 214 match with the energy storage device 240.

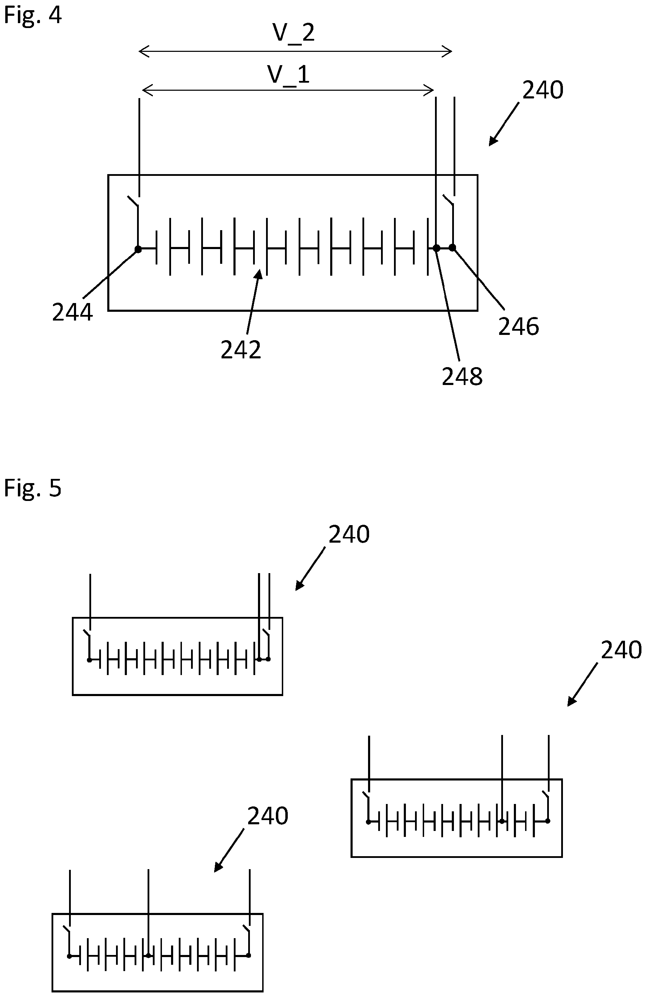

The method for operating an energy storage system according to the present disclosure helps to make sure that the energy storage device 240 is charged properly. The method helps, in particular, to distinguish between different types of the energy storage device 240 used in the energy storage system and ensures that appropriate charging characteristics are applied during charging the energy storage device 240 during operation. Figures 3 and 4 show two different types of energy storage devices 240 which can be distinguished or identified with the help of the method.

The energy storage devices 240 of figures 3 and 4 may be used in the energy storage system of figure 2. The energy storage devices 240 each comprise a plurality of energy storage cells 242, which are electrically connected in series. Each energy storage device 240 may be assigned three contact points 244, 246, 248 which are arranged along the serial connection and are electrically connected thereto. In figures 2 and 3, the contact points 244, 246, 248 are configured for taking voltage measurements. For example, the voltage across the first 244 and the third 248 contact points as well as the voltage across the first 244 and the second 246 contact points can be measured.

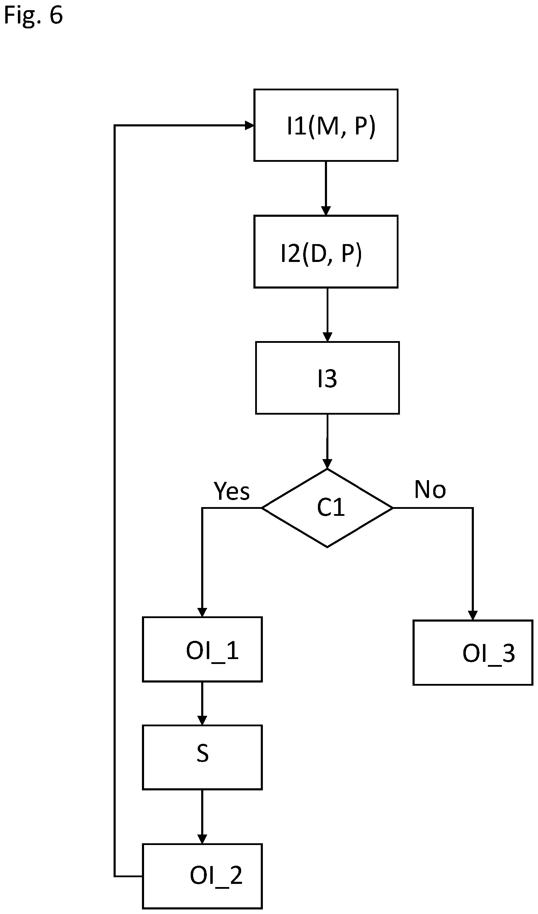

As can be seen, the third 248 contact point is arranged at different locations in figures 3 and 4. Accordingly, the ratio between the number of energy storage cells between the first 244 and the third 248 contact points to the number of energy storage cells between the first 244 and the second 246 contact points are different in figure 3 and 4. If, during charging, all energy storage cells 242 are charged equally, the ratio of the voltage across the first 244 and third 248 contact points to the voltage across the first 244 and the second 246 contact points differ from each other in figures 3 and 4. This can be exploited for determining whether one uses the correct charging characteristics as explained in connection with figure 6.

In case of figure 4 which may be representative of a battery, e.g., Lithium ion battery, and where the center terminal i.e., third 248 contact point may be shorted with the second terminal 246, the ratio between the number of energy storage cells between the first 244 and the third 248 contact points to the number of energy storage cells between the first 244 and the second 246 contact points is unity.

Figure 5 shows an exemplary embodiment of the set of energy storage devices 240. One energy storage device of a first type has the third contact point almost at the same position as the second contact point, namely at the same electrical potential as second contact point, like in figure 4. By way of example, this arrangement of contact points is used to label energy storage devices, e.g., batteries in which the cells are connected in series. An energy storage device of a second type has the third contact point at about, e.g., 2/3 of the path between the first and second contact points. By way of example, this arrangement of contact points is used to label energy storage device consisting of lithium batteries connected in series. Another energy storage device of a third type has the third contact point at approximately half the way between the first and second contact points. For example, this arrangement of contact points is used to label energy storage devices consisting of supercapacitors or ultracapacitor modules or cells connected in series.

Any of these energy storage devices 240 is said to be in a state of balance or optimal state of health (SOH) if the voltage across or corresponding to each cell is in close range in comparison to the voltage of any other cell in the series. This can be ascertained by implementing the center contact point or the additional contact point as described herein above and below. In the exemplary embodiments illustrated in figure 5, the terminal corresponding to the center contact point is the third contact point characteristically connected between the charging terminals, i.e., the first 244 and the second 246 terminals.

If the actual energy storage device that is installed or is in operation is not of the expected type i.e., the right energy storage that fits or is compatible with the given system e.g., pitch system, then one or more monitoring functions (or parameters as defined herein above and below) are compared with predefined threshold(s). If a deviation with respect to the predefined threshold(s)(both upper limit and lower limit) is detected, then a consequence that is or would be detrimental to the energy storage device is ascertained, and an action e.g., a remedy or a corrective action is triggered, which are described with reference to figures 6 to 12 below.

Figure 6 shows a flowchart of an exemplary embodiment of the method for operating an energy storage system, e.g., the energy storage system 200 of figures 2 to 4. To begin with, the first information I1 and second information I2 are provided. The first information I1 is representative of an outcome of an operation performed on at least one measured value M of a parameter P which is measured across at least one pair of contact points. The second information I2 is representative of an outcome of an operation performed on at least one reference value D of the parameter P across the at least one pair of contact points. This outcome is the expected outcome when the energy storage system is of a predefined type, i.e., the reference value D is the value which is expected, for example, to be measured when the energy storage system is of the predefined type. In a further step, third information I3 is determined depending on the first I1 and the second I2 information, e.g., by comparing the first I1 and the second I2 information. The third information I3 is representative of whether the energy storage system charged is of the predefined type e.g., based on the comparison.

After determining the third information 13, a further step is executed in which operating information OI_1, OI_2, OI_3 for the charging circuit is determined depending on the third information 13. For example, if a first condition C1 is fulfilled which comprises that the third information I3 is representative of the energy storage system, e.g. hardware and/or software characteristics constituting the energy storage system, not being the energy storage system of the predefined type, the operating information OI_1 is determined such that charging of the energy storage device with the help of the charging circuit is (temporarily) disabled or suspended (as indicated by left hand side flow path in figure 6). In a next step, a command or a signal S being indicative of new or updated charging parameters for the charging circuit is determined. The updated charging parameters are the ones that fit to the energy storage device and its operational characteristics.

Then, operating information OI_2 is determined depending on the signal S such that when this operating information OI_2 is used to control or operate the charging circuit, the energy storage device is charged with the new or updated charging parameters, or an entirely new hardware system (charger, energy storage device, etc.,) depending on the case. The method may then be restarted from the beginning.

Alternatively, if, for example, the energy storage device is not compatible with the charging circuit, the signal S may be indicative of a corrective action. In other words, the signal S may be indicative of need and/or replacement of the charging circuit, e.g., the charger itself. In particular, if the first condition C1 is fulfilled as a consequence of installation or connection of wrong charging circuit with the energy storage system, then the operating information OI_1 is determined such that charging of the energy storage device with the help of the charging circuit is (temporarily) disabled or suspended, and a command or a signal prompting replacement of the charger is provided. In one embodiment, the command or the signal S may be indicative of a right type of charger that fits with the energy storage system which when installed consequently would return an output that the first condition is C1 is not fulfilled.

In other embodiments, the command or the signal S may be indicative that the energy storage device of the energy storage system itself is not the right type, i.e., the predefined type.

Upon generation of the signal S, an operator is informed about the incompatibility and, accordingly, exchanges the charging circuit or the energy storage device or he/she changes the charging parameters. After that, charging can be started again with appropriate operating information OI_2 and the method may be restarted.

If, on the other hand, the first condition C1 is not fulfilled, particularly if the energy storage system is of the predefined type, the operating information OI_3 may be determined such that charging of the energy storage device via the charging circuit is continued without any change of charging parameters, for example (indicated by right-hand side flow path of figure 6).

The method of figure 6 shall be exemplified in greater detail using two concrete examples:
Firstly, considering that the energy storage device 240 for which the method is executed is the one shown in figure 3. The parameter P is the voltage and the measured value M is the voltage V_1 across the first 244 and the third 248 contact points (first pair of contact points) as well as the voltage V_2 across the first 244 and the second 246 contact points (second pair of contact points). The operation may be the mathematical operation of deviation and, accordingly, the outcome of the operation is a first ratio M_r of the measured voltages V_1, V_2. In other words, the first information I1 is representative of the ratio M_r between the measured voltage V_1 across the first pair and the measured voltage V_2 across the second pair.

In this case, as a further step, the second information I2 which is representative of a second ratio D_r of a reference voltage V_3 across the first pair of contact points and a reference voltage V_4 across the second pair of contact points is taken into account. The reference voltages V_3 and V_4 are the expected voltages when the energy storage system would be of the predefined type.

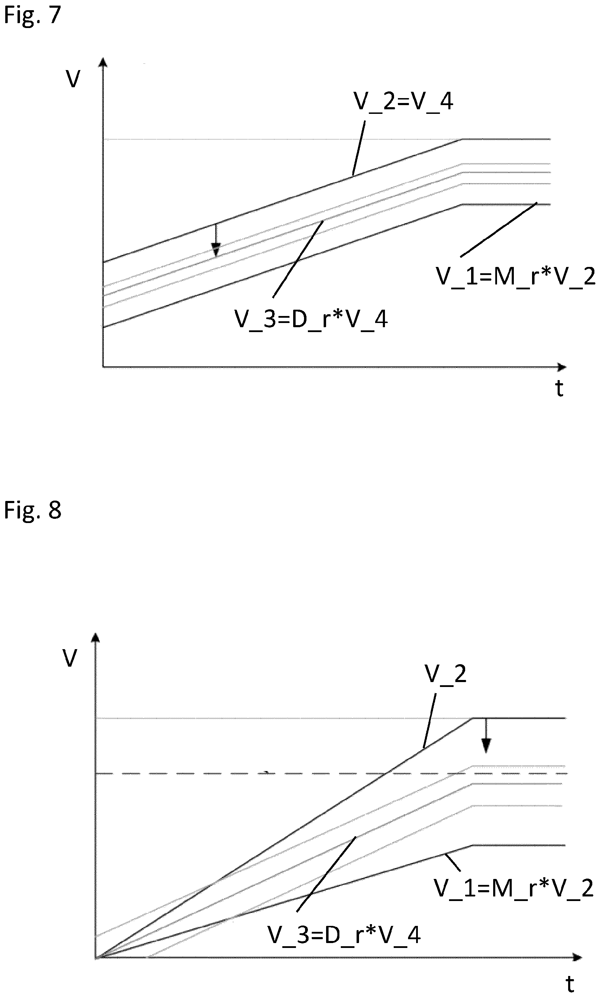

In the example of the energy storage device of figure 3, determining the third information I3 is, for example, done by comparing the ratio M_r of the measured voltages with the ratio D_r of the reference voltages during charging of the energy storage device. This is further illustrated in figures 7 and 8. Figure 7 shows the case of the energy storage device being a serial connection of batteries and figure 8 shows the case of the energy storage device being a serial connection of ultracapacitors.

In other embodiments, the measured parameters, e.g., a voltage, a resistance, etc., can be used to determine state of health of the storage device. For example, an optimization routine or procedure involving the measured parameters e.g., voltages can be performed to obtain qualitative as well as quantitative assessments of other parameters, e.g., capacitance or internal resistance which may provide an indication of current state of health or life of the energy storage device.

According to an exemplary embodiment, an estimator may be employed to determine state of health of the storage device based on measured parameters, e.g., voltage. For example, for distinguishing different energy storage types, an algorithm may be developed in which certain parameters are estimated, e.g., capacitance and/or resistance. Accordingly, voltage(s) between one terminal and the center contact in the estimator may be used to determine capacitance and/or resistance for the cells in that part of the storage device, e.g., the ultracapacitor. Simultaneously, the estimator can be run on the overall voltage to get the overall capacitance and/or resistance. Based on this, one can determine the position of the center contact and thus the type of storage.

In figure 7, the measured voltage V_1 across the first pair of contact points 244, 248 and the measured voltage V_2 across the second pair of contact points 244, 246 are illustrated as a function of time. The number of energy storage cells 242 between the first pair of contact points 244, 248 is about 1/3 of the number of energy storage cells 242 between the second pair of contact points 244, 246 (see also figure 3). Accordingly, the measured voltage V_1 is about 1/3 of the measured voltage V_2, i.e. the first ratio M_r is approximately 1/3.

If, on the other hand, the energy storage device of the predefined type (expected type) is one in which the third contact point 248 lies in the middle between the first 244 and the second 246 contact points, the second ratio D_r would be approximately 1/2. This case is also illustrated in figure 7. If the reference voltage V_4 of the second pair of contact points is assumed to be equal to the voltage V_2, the corresponding reference voltage V_3 of the first pair of contact points would follow the graph indicated in figure 7. For determining the third information 13, the first information I1 is compared with the second information I2. For this purpose, it is determined whether the measured voltage V_1 or the first ratio M_r lies within a predefined range around the expected voltage V3 or around the second ratio D_r. In figure 7, this range is indicated by the two lines around V_3. As can be seen, the measured voltage V_1 lies outside this range and, accordingly, the third information I3 would be determined to be representative of the energy storage system to not be of the predefined type.

Figure 8 is similar to figure 7. However, since the energy storage cells are ultracapacitors, which can be completely discharged, the graphs start at a voltage of 0. The measured voltage V_1 is not outside the range around V_3 from the very beginning, as it is the case in figure 7, but leaves the range after a certain time. Still, the fact that the measured voltage V_1 leaves the range around the reference voltage V_3 indicates that the energy storage device or the energy storage system is not of the predefined type.

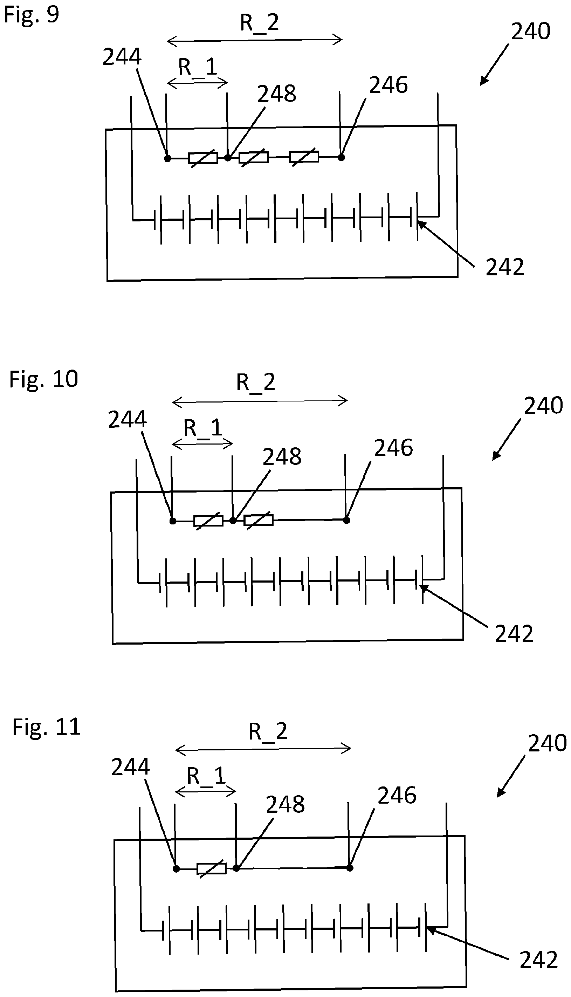

Figures 9 to 11 show three further exemplary embodiments of energy storage devices which are, for example, of different types. Here, the energy storage devices 240 each comprise at least one temperature-dependent resistance element. In figures 9 and 10, there are a plurality of temperature dependent resistance elements connected in series. The contact points 244, 246 and 248 are, in contrast to what is shown in figure 3 to 5, not electrically connected to the serial connection of the energy storage cells 242 but to the serial connection of the temperature dependent resistance elements. The temperature dependent resistance elements can be used to monitor the temperature across the serial connection of energy storage cells 242. However, as the energy storage devices 240 of figure 9 to 11 differ from each other in terms of the ratio between the number of temperature dependent resistance elements between the first 244 and the second 246 to the number of temperature dependent resistance elements between the first 244 and the third 248 contact points, the resistance measurements across the different pairs of contact points can also be used to determine whether the energy storage system is of the predefined type. This works in an equivalent way as explained in connection with, for example, figures 7 and 8.

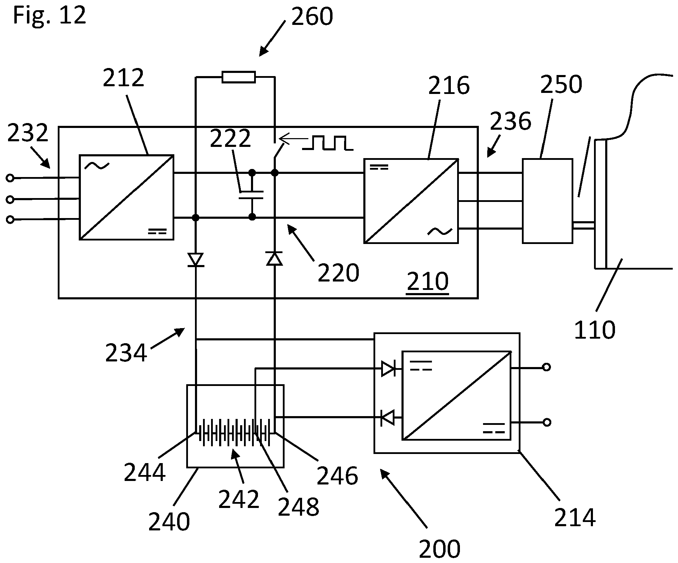

Figure 12 shows a further exemplary embodiment of an actuation system. In this case, a two-diode arrangement interconnects the energy storage device 240 with the DC link intermediate circuit 220 so that the DC link intermediate circuit 220 can be provided with electrical energy from the energy storage device 240. The charging circuit 214 is external in this case, i.e. it is not directly connected to the DC link intermediate circuit 220. Particularly, the charging circuit 214 of figure 12 does not use energy from the DC link intermediate circuit 220 to charge the energy storage device 240. Rather, the charging circuit 214 uses power of a sperate/different power supply to charge the energy storage device 240. Excess energy in the DC link intermediate circuit 220 can be burned in an energy dissipating element 260 which is, for example, a braking resistor.

### List of reference signs:

- 100: wind turbine
- 102: tower
- 104: foundation
- 106: nacelle
- 108: rotor
- 110: rotor blade
- 112: rotor hub

- 200: energy storage system
- 210: control device
- 212: first converter
- 214: charging circuit
- 216: second converter
- 218: bidirectional converter
- 220: DC link intermediate circuit
- 222: DC link capacitor
- 232: supply grid input
- 234: energy storage terminals
- 236: terminals
- 240: energy storage device
- 242: energy storage cell
- 244: first contact point
- 246: second contact point
- 248: third contact point
- 250: electro-mechanical actuator
- 260: energy dissipating element

- I1: first information
- I2: second information
- I3: third information
- OI: operating information

- C1: first condition
- S: signal

- P: parameter
- M: measure value
- D: reference value
- M_r: first ratio
- D_r: second ratio
- V_1: measured voltage
- V_2: measured voltage
- V_3: reference voltage
- V_4: reference voltage
- R_1: measured temperature-dependent resistance
- R_2: measured temperature-dependent resistance

## Claims

1. Method for operating an energy storage system (200) of a wind turbine (100), wherein the energy storage system (200) comprises:
• an energy storage device (240) having a serial connection of energy storage cells (242),
• a plurality of contact points (244, 246, 248) across the serial connection for measuring a parameter (P), and
• a charging circuit (214) for charging the energy storage device (240),
wherein the method comprises:
- providing first information (I1) which is representative of an outcome of an operation performed on at least one measured value (M) of the parameter (P) across at least one pair of contact points of the plurality of contact points (244, 246, 248),
- providing second information (12) which is representative of an outcome of an operation performed on at least one reference value (D) of the parameter (P) across the at least one pair of contact points which is expected when the energy storage system (200) is of a predefined type,
- determining third information (I3) depending on the first (I1) and the second (I2) information, wherein the third information (I3) is representative of whether the energy storage system (200) is of the predefined type,
- determining operating information (OI_1, OI_2, OI_3) for the charging circuit (214) depending on the third information (I3) .

2. Method according to claim 1, wherein
- the parameter (P) is voltage, and
- the at least one pair of contact points comprises a first pair (244, 248) of contact points and a second pair (244, 246) of contact points, and
- the first information (I1) is representative of a first ratio (M_r) which is an outcome of an operation performed on a measured voltage (V_1) across the first pair (244, 248) of contact points and a measured voltage (V_2) across the second pair (244, 246) of contact points, and
- the second information (I2) is representative of a second ratio (D_r) which is an outcome of an operation performed on a reference voltage (V_3) across the first pair (244, 248) of contact points and a reference voltage (V_4) across the second pair (244, 246) of contact points which are expected when the energy storage system (200) is of the predefined type.

3. Method according to claim 1, wherein
- the parameter (P) is resistance, in particular temperature-dependent resistance, and
- the at least one pair of contact points comprises a first pair (244, 248) of contact points and a second pair (244, 246) of contact points, and
- the first information (I1) is representative of an outcome of an operation performed on a measured resistance (R_1) between the first pair (244, 248) of contact points and a measured resistance (R_2) between the second pair (244, 246) of contact points, and
- the second information (I2) is representative of an outcome of an operation performed on a reference resistance between the first pair (244, 248) of contact points and a reference resistance between the second pair (244, 246) of contact points which are expected when the energy storage system (200) is of the predefined type.

4. Method according to any one of the preceding claims, wherein
- the first information (I1) is provided during charging the energy storage device (240) with the help of the charging circuit (214), and
- the predefined type of the energy storage system (200) comprises a predefined type of energy storage device (240) which is a type that is compatible with at least the charging circuit (214) and its operation, in particular its charging parameters.

5. Method according to any one of the preceding claims, wherein
- if a first condition (C1) is met, the operating information (OI_1) is determined such that charging of the energy storage device (240) with the help of the charging circuit (214) is at least disabled,
- the first condition (C1) comprises that the third information (I3) is representative of the fact that the energy storage system (200) is not of the predefined type.

6. Method according to claim 5 in its dependency on claim 4, wherein
- if the first condition (C1) is met, the operating information (OS) is determined such that charging of the energy storage device (240) is temporarily disabled, and resumed with updated charging parameters.

7. Method according to claim 6, wherein the method comprises
- providing a signal (S) indicative of at least one of the updated charging parameters and a corrective action.

8. Method according to any one of the preceding claims, wherein the charging circuit (214) is:
- configured within a bidirectional converter (218) connecting a DC-link intermediate circuit (220) with the energy storage device (240), or
- an external charger connectable to the energy storage device (240).

9. Control device (210, 214) comprising means for executing the method according to any one of the preceding claims.

10. Energy storage system (200) comprising
- an energy storage device (240) having a serial connection of energy storage cells (242),
- a plurality of contact points (244, 246, 248) across the serial connection, wherein the plurality of contact points (244, 246, 248) provides at least one pair of contact points configured for performing a measurement of a parameter (P) across the at least one pair of contact points, and
- a charging circuit (214) for charging the energy storage device (240), wherein
- the energy storage system (200) is configured to perform the method according to any one of claims 1 to 8.

11. Energy storage device (240) comprising
- a serial electrical connection of energy storage cells (242),
- a first (244), a second (246), and a third (248) contact point across the serial connection, wherein
- the contact points (244, 246, 248) are configured such that at least one measurement of a parameter (P) can be taken across at least one pair of contact points,
- wherein, the third contact point (248) is arranged between the first (244) and the second (246) contact points.

12. Energy storage device (240) according to claim 11, wherein
- the number of energy storage cells (242) between the first (244) and the third (248) contact points differs from the number of energy storage cells (242) between the second (246) and the third contact points (248).

13. Set of energy storage devices (240), comprising:
- an energy storage device (240) of a first type and an energy storage device (240) of a second type, wherein
- the energy storage device (240) of the first type is an energy storage device according to claim 11 or 12,
- the energy storage device (240) of the second type likewise comprises a serial electrical connection of energy storage cells (242), as well as a first (244), a second (246), and a third (248) contact point across the serial connection, wherein the third contact point (248) is arranged between the first (244) and the second (246) contact points,
- the energy storage device (240) of the first type differs from the energy storage device (240) of the second type by the ratio of the number of energy storage cells (242) between the first (244) and the second (246) contact points to the number of energy storage cells (242) between the first (242) and the third (248) contact points, and/or
- the energy storage device (240) of the first type differs from the energy storage device (240) of the second type by the ratio of the resistance between the first (244) and second (246) contact points to the resistance between the first (244) and the third (248) contact points.

14. Set according to claim 13, wherein
- the first type and the second type differ from each other in terms of the technology used for storing energy.

15. Wind turbine (100) comprising an energy storage system (200) according to claim 10.
